# EUROPÄISCHE PATENTSCHRIFT

(11) **EP 2 726 246 B1**
(45) Veröffentlichungstag und Bekanntmachung des Hinweises auf die Patenterteilung: **10.01.2024**
(21) Anmeldenummer: 12728208.5
(22) Anmeldetag: 12.06.2012
(51) Int. Cl.: G02B 27/00, B23K 26/70

(54) **LASERBEARBEITUNGSKOPF MIT EINEM OPTISCHEN ELEMENT**
LASER MACHINING HEAD HAVING AN OPTICAL ELEMENT
TÊTE DE TRAITEMENT LASER COMPORTANT UN ÉLÉMENT OPTIQUE

(30) Priorität: 29.06.2011 DE 102011078359
(43) Veröffentlichungstag der Anmeldung: 07.05.2014
(60) Teilanmeldung: 20215442.3
(73) Patentinhaber: TRUMPF Werkzeugmaschinen SE + Co. KG, 71254 Ditzingen (DE)
(72) Erfinder: WEICK, Jürgen-Michael, 71679 Asperg (DE); RUPP, Thomas, 71636 Ludwigsburg (DE); VEES, Dominik, 72072 Tübingen (DE)
(74) Vertreter: Trumpf Patentabteilung
(86) Internationale Anmeldenummer: PCT/EP2012/061086
(87) Internationale Veröffentlichungsnummer: WO 2013/000700

(56) Entgegenhaltungen:
- WO-A1-2006/103104
- WO-A1-2008/006416
- DE-A1-102005 010 479

## Beschreibung

Die Erfindung betrifft einen Laserbearbeitungskopf mit den Merkmalen des Oberbegriffs des Patentanspruchs 1.

Ein Laserbearbeitungskopf mit den Merkmalen des Oberbegriffs des Patentanspruchs 1 ist aus der WO 2006/103104 A1 bekannt.

Lasermaterialbearbeitungsmaschinen weisen einen Laserbearbeitungskopf auf, der als optisches Element u.a. zumindest eine Linse oder im Fall von YAG-Lasermaterialbearbeitungsmaschinen als optisches Element neben Linsen als optisches Element auch ein Schutzfenster umfassen kann. Im Bereich der Lasermaterialbearbeitung haben optische Elemente keine Kennung, die über eine laserbeschriftete Materialnummer und ein Produktionsdatum hinausgeht. Bei der Lasermaterialbearbeitung im Hochleistungsbereich kommt es jedoch zu besonderen Problemstellungen. Insbesondere können die optischen Elemente verschmutzen und/oder verschleißen bzw. altern. Es ist wünschenswert, hierüber Informationen zu erhalten und diese Informationen geeignet einzusetzen.

In der WO 2008/006416 A1 wird die Verwendung eines Transponders bei einem Brillenglas beschrieben.

Die DE 10 2005 010 479 A1 offenbart eine Vorrichtung mit mehreren optischen Elementen zur Insertion in einen Lichtstrahl, wobei jedes Element in seine Arbeitsposition im Strahlengang bringbar ist, wobei die Elemente in einem Magazin bereitgestellt sind und über einen Wechselmechanismus von einer Bereitstellungsposition in die Arbeitsposition verbringbar sind.

Die mit der vorliegenden Erfindung zu lösende Aufgabe besteht darin, Informationen vom Transponder auszulesen und zu schreiben, ohne dabei den Betrieb des Laserbearbeitungskopfs zu beeinträchtigen.

Gelöst wird diese Aufgabe durch einen Laserbearbeitungskopf mit den Merkmalen des Patentanspruchs 1.Der Transponder und die Lese- und/oder Schreibeinrichtung sind dabei bei eingebautem optischem Element vorzugsweise gegenüberliegend angeordnet, so dass diese nahe beieinander angeordnet sind. Dadurch ist es möglich, dass die Informationen einfach und störungsfrei gelesen werden können. Über die Materialnummer des optischen Elements, insbesondere, wenn es sich dabei um eine Linse handelt, ist eine Prüfung auf die korrekte Brennweite möglich. Die Brennweite kann aber auch als eigener Wert hinterlegt, oder an andere Kenndaten gebunden indirekt ableitbar sein. Dadurch kann ein Schaden durch den Einbau einer falschen Brennweite verhindert werden. Über die eindeutige Seriennummer, die aus dem Transponder ausgelesen werden kann, kann sichergestellt werden, dass es sich um ein freigegebenes optisches Element handelt. Auch hier können Daten zur Freigabe direkt hinterlegt und abrufbar sein.

Mit einem solchen optischen Element ist es möglich, nicht nur Daten zum Einbauzustand des optischen Elements, sondern auch sich ändernde Eigenschaften während der Nutzung des optischen Elements zu hinterlegen und bei der Lasermaterialbearbeitung zu berücksichtigen. Dies ist insbesondere bei der Laserbearbeitung im Hochleistungsbereich, d.h. bei Leistungen ≥ 1kW vorteilhaft. Das optische Element ist daher vorzugsweise für den Einsatz bei Laserleistungen ≥ 1kW geeignet.

Bei dem optischen Element kann es sich um ein transmissives oder reflektives optisches Element handeln. Insbesondere kann es sich um ein optisches Element als solches, nämlich ohne Halterung, Fassung, Gehäuse oder dgl. handeln. Es kann sich also um ein optisches Element im Sinne eines optisch aktiven Elements, wie zum Beispiel eine Linse, ein Schutzfenster, einen Strahlteiler, einen Reflektor, einen Spiegel, einen Filter oder dgl. handeln. Unter einem optischen Element im Sinne der Erfindung kann jedoch auch ein optisch wirksames Element mit einem Anbauteil, wie einer Fassung, Halterung, Gehäuse oder dgl. verstanden werden.

Im Falle eines transmissiven optischen Elements kann beispielsweise nur ein zentraler Bereich im Betrieb optisch genutzt werden bzw. von einem Laserstrahl erfasst werden, während ein Randbereich vom Laserstrahl nicht erfasst bzw. optisch nicht genutzt wird. Der Transponder könnte dann im Randbereich angeordnet werden, ohne die optischen Eigenschaften des optischen Elements im Betrieb zu stören.

Im Falle eines reflektiven optischen Elements kann beispielsweise die der reflektierenden Seite gegenüberliegende Fläche des optischen Elements optisch ungenutzt sein und von dem Laserstrahl nicht erfasst werden. Der Transponder könnte dann an dieser Fläche, insbesondere an der Rückseite des optischen Elements, angeordnet werden.

Auch ist es denkbar, dass der Transponder so an dem optischen Element angeordnet wird, dass er einen Teil des an sich optisch nutzbaren Flächenbereichs abdeckt bzw. abschattet. Dadurch wird dieser abgedeckte bzw. abgeschattete Flächenanteil im Sinne der Erfindung zu einer im Betrieb der Laserbearbeitungsmaschine optisch ungenutzten und/oder vom Laserstrahl nicht erfassten Fläche.

Besondere Vorteile ergeben sich, wenn der Transponder beschreibbar ist. Dadurch können Informationen bezüglich der Historie, insbesondere des Lebenslaufs des optischen Elements, bezüglich des Verschmutzungsgrads, also insbesondere Informationen, die sich während der Verwendungsdauer des optischen Elements verändern, in einem Speicher des Transponders abgelegt werden. Eine Steuerung der Lasermaterialbearbeitungsmaschine kann dadurch beispielsweise die Schneidstunden eines optischen Elements registrieren, da auch bei einem Wechsel des Laserbearbeitungskopfs immer die eingebaute Linse eindeutig erkannt werden kann. Ebenso können Reinigungszyklen und Absorptionshistorie gespeichert und entsprechend angezeigt werden. Ein Verwender bekommt Transparenz über ein wichtiges Verschleißteil seiner Lasermaterialbearbeitungsmaschine. Besonders verschleißfördernde Verfahren (z.B. das Schneiden mit Pressluft) können so in der Nutzungshistorie entdeckt werden, indem die Absorptionszunahme über die Einsatzdauer registriert wird. Auf diese Weise können beispielsweise verschleißfördernde Prozesse, die das optische Element erfahren hat, identifiziert werden, um Aussagen über die Restlebensdauer des optischen Elements treffen zu können. Zum anderen kann erkannt werden, ob ein Prozess verschleißfördernd auf das optische Element wirkt.

Eine Anordnung des Transponders im Bereich der Umfangsfläche des optischen Elements hat den Vorteil, dass durch den Transponder von dem optischen Element wenig verdeckt wird, so dass die optischen Eigenschaften des optischen Elements, wie z.B. die Größe der optisch nutzbaren Fläche des optischen Elements, durch den Transponder nur unwesentlich beeinträchtigt werden. Außerdem kann eine entsprechende Lese- und/oder Schreibeinrichtung besonders einfach in einem Laserbearbeitungskopf im Bereich der Umfangsfläche des optischen Elements angeordnet werden.

Dadurch ist es möglich, Transponder und Lese- und/oder Schreibeinrichtung nahe beieinander anzuordnen, so dass nur eine geringe Sendeleistung für eine drahtlose Übertragung der Information vom Transponder zur Lese- und/oder Schreibeinrichtung oder in umgekehrter Richtung notwendig ist.

Besonders vorteilhaft ist es, wenn der Transponder an der Umfangsfläche angeordnet ist. Dadurch ist es möglich, dass Information vom Transponder zur Lese- und/oder Schreibeinrichtung oder in umgekehrter Richtung in radialer Richtung des optischen Elements übertragen wird. Dadurch sind die Übertragungswege besonders kurz. Auch wird dadurch in Transmissionsrichtung des optischen Elements keine Fläche des optischen Elements durch den Transponder abgedeckt.

Gemäß einer besonders bevorzugten Ausgestaltung der Erfindung kann vorgesehen sein, dass die Fläche, insbesondere die Umfangsfläche, einen ebenen Abschnitt, insbesondere einen planen Flächenanschliff oder Flächenanschnitt, aufweist, an dem der Transponder angeordnet ist. An einem ebenen Abschnitt kann der Transponder besonders gut und zuverlässig befestigt werden, beispielsweise kann er an einem ebenen Abschnitt im Vergleich zu einem gebogenen Abschnitt besser angeklebt werden. Weiterhin kann über den ebenen Abschnitt der Umfangsfläche ein lagerichtiger Einbau des optischen Elements erzwungen werden, indem beispielsweise eine Halterung einen korrespondierenden ebenen Abschnitt aufweist oder anderweitig entsprechend ausgebildet ist.

Wie bereits erwähnt, ist es im Bereich der Lasermaterialbearbeitung im Hochleistungsbereich besonders vorteilhaft, wenn in dem Transponder eine Information betreffend die Historie und/oder den Zustand des optischen Elements gespeichert ist.

Der Transponder kann als RFID-Transponder ausgebildet sein. Wird ein RFID-Transponder verwendet, so kann die Information zwischen Transponder und Lese- und/oder Schreibeinrichtung drahtlos ausgetauscht werden. Außerdem kann ein RFID-Transponder ohne eigene Energieversorgung auskommen. Ein besonders kleiner Aufbau des Transponders ergibt sich, wenn dieser aus Polymeren hergestellt ist. Die Kopplung mit einem Lesegerät kann durch magnetische Wechselfelder geringer Reichweite oder durch hochfrequente Radiowellen erfolgen. Damit können die Daten nicht nur übertragen, sondern auch der Transponder mit Energie versorgt werden.

Wenn es sich um einen beschreibbaren RFID-Transponder handelt, so kann dieser einen EEPROM-Speicher oder einen FRAM-Speicher aufweisen. Denkbar ist grundsätzlich auch ein SRAM-Speicher. Dieser würde jedoch eine eigene Stromversorgung benötigen.

Für die Funktion einer Linsensensorik ist eine Transmission bei 500nm wichtig. Ist in dem Transponder eine Information über die Rohmaterialquelle des optischen Elements gespeichert, ist eine Verbesserung der Genauigkeit denkbar. Dies gilt insbesondere für eine CO2-Sensorik. Bei einem YAG-Laser könnte stattdessen die Emissivität des optischen Elements in dem Transponder gespeichert sein und ein zu übergebender Parameter sein.

An der Halterung für das optische Element kann eine Orientierungshilfe für den lagerichtigen Einbau des optischen Elements vorgesehen sein. Insbesondere kann die Orientierungshilfe dabei mit einem ebenen Abschnitt am Umfang des optischen Elements zusammenwirken. Somit kann über die Formgebung der Halterung und des optischen Elements ein lagerichtiger Einbau erzwungen werden.

Um Beschädigungen der Lese- und/oder Schreibeinrichtung zu verhindern kann vorgesehen sein, dass das optische Element in einem Hochdruckraum angeordnet ist, in dem im Betrieb des Laserbearbeitungskopfs ein Gas unter hohem Druck angeordnet ist und die Lese- und/oder Schreibeinrichtung in einem Niederdruckraum angeordnet ist, in dem im Betrieb des Laserbearbeitungskopfs ein Gas bei einem niedrigeren Druck als im Hochdruckraum angeordnet ist, wobei der Hochdruckraum und der Niederdruckraum durch eine Wandung getrennt sind, die zumindest in einem Bereich einen nichtmetallischen Werkstoff aufweist. Dadurch, dass in einem Bereich ein nichtmetallischer Werkstoff, insbesondere ein dielektrischer Werkstoff, vorgesehen ist, kann sichergestellt werden, dass Informationen zwischen dem Transponder und der Lese- und/oder Schreibeinrichtung ausgetauscht werden können. Dies wäre - nach derzeitigem allgemeinen Kenntnisstand - nicht möglich, wäre die Wandung vollständig aus metallischem Werkstoff ausgebildet.

Zu diesem Zweck kann die Wandung eine Durchgangsöffnung aufweisen, die durch ein Element aus nichtmetallischem Werkstoff verschlossen ist. Beispielsweise kann die Durchgangsöffnung durch ein Quarzfenster verschlossen sein.

Insbesondere kann das optische Element in einer Linsenpatrone angeordnet sein, deren Wandung eine durch ein Element aus nichtmetallischem Werkstoff verschlossene Durchgangsöffnung aufweist. Die Durchgangsöffnung kann dabei beispielsweise eine Bohrung in der Wandung in der Linsenpatrone sein. Der Durchmesser der Durchgangsöffnung sollte dabei vorzugsweise in etwa einem Antennendurchmesser des Transponders entsprechen. Als besonders vorteilhaft hat sich ein Durchmesser für die Durchgangsöffnung von 6 mm herausgestellt.

Besonders einfach kann die Durchgangsöffnung durch das Element aus nichtmetallischem Werkstoff verschlossen werden, wenn dieses eingeklebt ist.

In dem Transponder können Informationen gespeichert sein, die es der Lasermaterialbearbeitungsmaschine erlauben, den Lasermaterialbearbeitungsprozess so einzustellen, dass eine optimierte Materialbearbeitung durchgeführt werden kann.

Als Information betreffend das optische Element kann zumindest eine der folgenden Informationen ausgelesen werden: Materialnummer, Seriennummer, Hersteller, Produktionsdatum, Chargennummer, Rohmaterial, Emissivität, Inbetriebnahmedatum, Transmission für eine Prüfwellenlänge. Durch die Erfassung dieser Parameter ist es beispielsweise möglich, eine Charge eines optischen Elements zu erkennen, welche ein Problem durch Fertigungsfehler hat. Die Lasermaterialbearbeitungsmaschine kann dadurch gezielt die schadhaften optischen Elemente erkennen und verhindern, dass mit diesen schadhaften optischen Elementen eine Lasermaterialbearbeitung durchgeführt wird. Der Lasermaterialbearbeitungsmaschine kann beispielsweise über Webdienste mitgeteilt werden, welche optischen Elemente, die beispielsweise über Materialnummer, Hersteller oder Produktionsdatum zu identifizieren sind, schadhaft sind.

Besonders vorteilhaft ist es, wenn Informationen betreffend die Verwendung des optischen Elements in den Transponder geschrieben werden. Wie bereits erwähnt, kann die Dauer der Verwendung des optischen Elements gespeichert werden. Auch können Reinigungszyklen bzw. die Anzahl der Reinigungen, die Absorptionshistorie, die Betriebsstunden, insbesondere die Laser-ein-Zeiten, die Laserleistung und -leistungsdichten und/oder die Betriebsarten des Lasers, also cw (continuous wave) oder gepulst, gespeichert und anschließend auch wieder ausgelesen und bei Bedarf angezeigt werden.

Entsprechende Daten, die über die Laserbearbeitungsmaschine, beispielsweise direkt über die Schneidkopfelektronik und/oder indirekt über die an die Lasersteuerung erfasst werden, können über Anbindung an die Lese-/Schreibeinrichtung auf den Transponder übertragen werden. Die Anbindung kann sowohl über Leitungen als auch andere Mittel zur Datenübertragung ohne physische Verbindungen ausgebildet sein.

Es kann vorgesehen sein, dass der lagerichtige Einbau des optischen Elements anhand des Transponders überprüft wird. Wird das optische Element beispielsweise auf dem Kopf stehend eingebaut, kann der Transponder nicht lesbar sein. Dadurch kann erkannt werden, dass das optische Element nicht richtig eingebaut wurde.

Weiterhin kann anhand des Transponders überprüft werden, ob es sich um ein für den Laserbearbeitungskopf oder den durchzuführenden Prozess zugelassenes optisches Element handelt. Dies kann durch Auslesen der entsprechenden Informationen aus dem Transponder festgestellt werden.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Ein bevorzugtes Ausführungsbeispiel der Erfindung ist in der Zeichnung schematisch dargestellt und wird nachfolgend mit Bezug zu den Figuren der Zeichnung näher erläutert. Es zeigen:
- Fig. 1: eine Längsschnittdarstellung durch einen Laserbearbeitungskopf einer Lasermaterialbearbeitungsmaschine, in den ein erfindungsgemäßes optisches Element eingebaut ist;
- Fig. 2: einen vergrößerten Ausschnitt des Laserbearbeitungskopfs der Figur 1;
- Fig. 3: eine vergrößerte Querschnittsdarstellung des Laserbearbeitungskopfs im Bereich des optischen Elements.

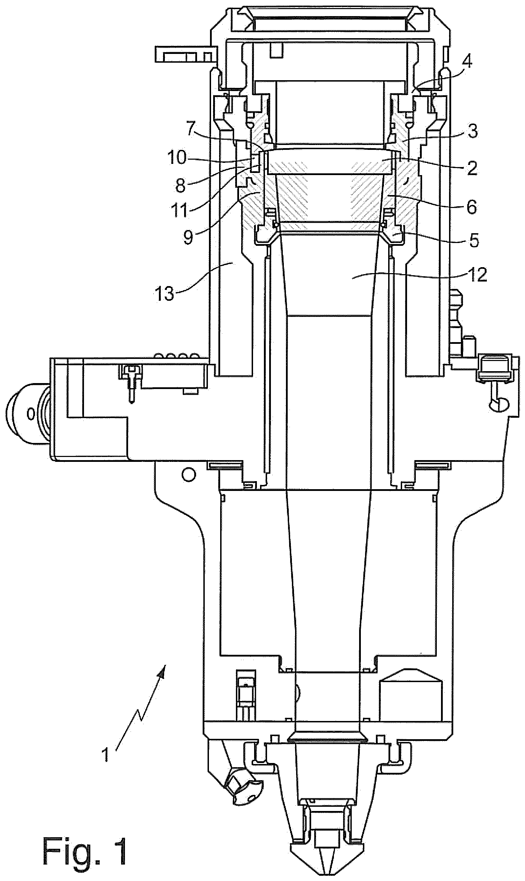

Die Figur 1 zeigt eine Längsschnittdarstellung eines als Laserschneidkopf ausgebildeten Laserbearbeitungskopfs 1 einer Lasermaterialbearbeitungsmaschine. Der Laserbearbeitungskopf 1 weist ein als Linse ausgebildetes optisches Element 2 auf. Dieses ist in einer Linsenpatrone 3 angeordnet, wobei die Linsenpatrone 3 austauschbar, insbesondere aus dem Laserbearbeitungskopf 1 herausnehmbar ist. Am oberen Ende der Linsenpatrone 3 ist ein Gewindering 4 dargestellt, der die Linsenpatrone im Laserbearbeitungskopf 1 hält. Der Gewindering 5 hält das optische Element 2 über einen Abstandshalter 6 in der Linsenpatrone 3 und damit im Laserbearbeitungskopf 1.

An dem optischen Element 2 ist ein als RFID-Etikett ausgebildeter Transponder 7 angeordnet. Dieser befindet sich gegenüberliegend einer Lese- und/oder Schreibeinrichtung 8. Durch die Lese- und/oder Schreibeinrichtung 8 können Informationen von dem Transponder 7 ausgelesen und in einigen Fällen auch Informationen in den Transponder 7 geschrieben werden. Die Lese- und/oder Schreibeinrichtung 8 steht mit einer hier nicht dargestellten Steuerung der Lasermaterialbearbeitungsmaschine in Verbindung.

Die Wandung 9 der Linsenpatrone 3 weist eine Durchgangsöffnung 10 auf, die durch ein Element 11 aus nichtmetallischem Werkstoff verschlossen ist. Durch das Element 11 aus nichtmetallischem Werkstoff wird ein Hochdruckraum 12, in dem das optische Element 2 angeordnet ist, von einem Niederdruckraum 13, in dem die Lese- und/oder Schreibeinrichtung 8 angeordnet ist, getrennt. Während die Wandung 9 aus metallischem Werkstoff ausgebildet ist, ist das Element 11 aus nicht-metallischem Werkstoff, insbesondere aus einem dielektrischen Werkstoff, wie beispielsweise Quarz, Kunststoff, oder Keramik, ausgebildet. Hierdurch wird ein Informationsaustausch zwischen Transponder 7 und Lese- und/oder Schreibeinrichtung 8 ermöglicht, der nicht möglich wäre, wenn die Wandung 9 vollständig aus metallischem Werkstoff ausgebildet wäre.

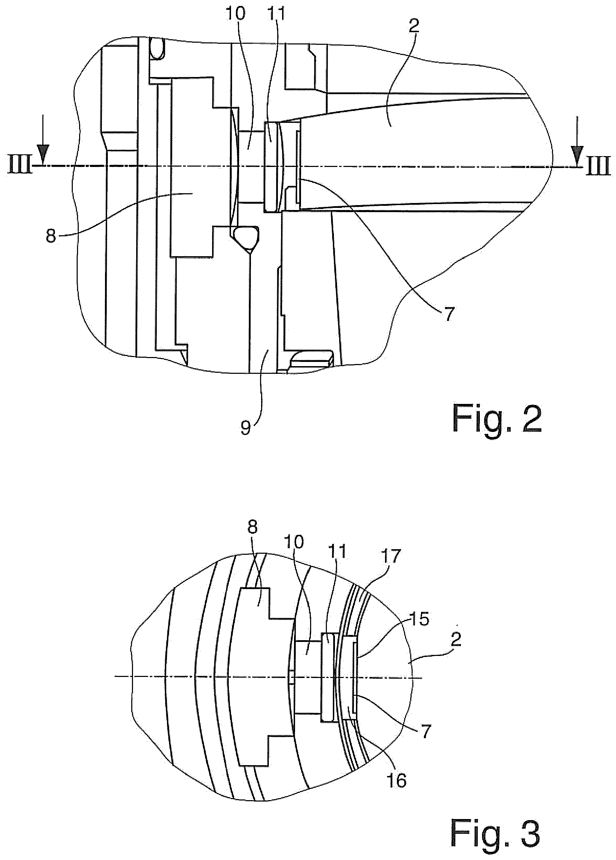

Aus der Detaildarstellung der Figur 2 ergibt sich, dass der Durchmesser des Elements 11 größer ist als der Durchmesser der Durchgangsöffnung 10. Insbesondere kann das Element 11 einen Durchmesser von etwa 8 mm aufweisen, während die Durchgangsöffnung 10 vorzugsweise einen Durchmesser von 6 mm aufweist. Die Größe der Durchgangsöffnung 10 wird dabei maßgeblich durch die Größe einer Antenne des Transponders 7 bestimmt.

Die Figur 3 zeigt eine Schnittdarstellung gemäß der Linie III-III der Figur 2. Hier ist besonders deutlich zu erkennen, dass das optische Element 2 in einem Abschnitt 15 eine ebene Umfangsfläche aufweist. An dieser ebenen Umfangsfläche im Abschnitt 15 ist der Transponder 7 angeordnet. Insbesondere ist der Transponder 7 in einer Ausnehmung 16 der Halterung 17 für das optische Element 2 vorgesehen. Die Ausnehmung 16 stellt dadurch eine Orientierungshilfe für den Einbau des optischen Elements 2 dar. In der Figur 3 sind weiterhin die Durchgangsöffnung 10, das Element 11 und die Lese- und/oder Schreibeinrichtung 8 zu erkennen.

## Patentansprüche

1. Laserbearbeitungskopf (1) mit einem optischen Element, das einen Transponder (7) aufweist und mit einer Halterung (17) für das optische Element (2), **dadurch gekennzeichnet, dass** der Transponder (7) auslesbare Informationen bezüglich des optischen Elements (2) enthält, und das optische Element eine im Betrieb optisch ungenutzte und/oder vom Laserstrahl nicht erfasste Fläche aufweist, wobei der Transponder (7) im Bereich dieser Fläche angeordnet ist und wobei der Laserbearbeitungskopf (1) eine Lese- und/oder Schreibeinrichtung (8) aufweist, die dem Transponder (7) des optischen Elements (2) zugeordnet ist.

2. Laserbearbeitungskopf nach Anspruch 1, **dadurch gekennzeichnet, dass** die Fläche eine Umfangsfläche des optischen Elements (2) ist.

3. Laserbearbeitungskopf nach Anspruch 2, **dadurch gekennzeichnet, dass** der Transponder (7) an der Umfangsfläche angeordnet ist.

4. Laserbearbeitungskopf nach einem der vorhergehenden Ansprüche, **dadurch gekennzeichnet, dass** die Fläche, insbesondere die Umfangsfläche, einen ebenen Abschnitt (15), insbesondere einen planen Flächenanschliff oder Flächenanschnitt, aufweist, an dem der Transponder (7) angeordnet ist.

5. Laserbearbeitungskopf nach einem der vorhergehenden Ansprüche, **dadurch gekennzeichnet, dass** in dem Transponder (7) eine Information betreffend die Historie und/oder den Zustand des optischen Elements (2) gespeichert ist.

6. Laserbearbeitungskopf nach einem der vorhergehenden Ansprüche, **dadurch gekennzeichnet, dass** der Transponder (7) als RFID-Transponder ausgebildet ist.

7. Laserbearbeitungskopf nach einem der vorhergehenden Ansprüche, **dadurch gekennzeichnet, dass** an der Halterung (17) für das optische Element (2) eine Orientierungshilfe für den lagerichtigen Einbau des optischen Elements (2) vorgesehen ist.

8. Laserbearbeitungskopf nach einem der vorhergehenden Ansprüche, **dadurch gekennzeichnet, dass** das optische Element (2) in einem Hochdruckraum (12) angeordnet ist, in dem im Betrieb des Laserbearbeitungskopfs (1) ein Gas unter hohem Druck angeordnet ist und die Lese- und/oder Schreibeinrichtung (8) in einem Niederdruckraum (13) angeordnet ist, in dem im Betrieb des Laserbearbeitungskopfs (1) ein Gas bei einem niedrigeren Druck als im Hochdruckraum (12) angeordnet ist, wobei der Hochdruckraum (12) und der Niederdruckraum (13) durch eine Wandung (9) getrennt sind, die zumindest in einem Bereich einen nichtmetallischen Werkstoff aufweist.

9. Laserbearbeitungskopf nach Anspruch 8, **dadurch gekennzeichnet, dass** die Wandung (9) eine Durchgangsöffnung (10) aufweist, die durch ein Element (11) aus nichtmetallischem Werkstoff verschlossen ist.

10. Laserbearbeitungskopf nach Anspruch 8 oder 9, **dadurch gekennzeichnet, dass** das optische Element (2) in einer Linsenpatrone (3) angeordnet ist, deren Wandung (9) eine durch ein Element (11) aus nichtmetallischem Werkstoff verschlossene Durchgangsöffnung (10) aufweist.

11. Laserbearbeitungskopf nach Anspruch 10, **dadurch gekennzeichnet, dass** das Element (11) aus nichtmetallischem Werkstoff in die Durchgangsöffnung (10) eingeklebt ist.

## Claims

1. A laser processing head (1) comprising an optical element having a transponder (7) and comprising a support (17) for the optical element (2), **characterized in that** the transponder (7) contains readable information relating to the optical element (2), and the optical element has a surface that is optically unused and/or not detected by the laser beam during operation, wherein the transponder (7) is arranged in the region of this surface, and wherein the laser processing head (1) comprises a reading and/or writing device (8) assigned to the transponder (7) of the optical element (2).

2. The laser processing head according to claim 1, **characterized in that** the surface is a peripheral surface of the optical element (2).

3. The laser processing head according to claim 2, **characterized in that** the transponder (7) is disposed on the peripheral surface.

4. The laser processing head according to one of the preceding claims, **characterized in that** the surface, in particular the peripheral surface, has a flat section (15), in particular a planar ground surface or a cut surface on which the transponder (7) is arranged.

5. The laser processing head according to one of the preceding claims, **characterized in that** information regarding the history and/or the condition of the optical element (2) is stored in the transponder (7).

6. The laser processing head according to one of the preceding claims, **characterized in that** the transponder (7) is designed as an RFID transponder.

7. The laser processing head according to one of the preceding claims, **characterized in that** an orientation aid for installing the optical element (2) in the correct position is provided for the optical element (2) on the support (17).

8. The laser processing head according to one of the preceding claims, **characterized in that** the optical element (2) is arranged in a high-pressure chamber (12) in which a gas under high pressure is arranged during operation of the laser processing head (1), and the reading and/or writing device (8) is arranged in a low-pressure chamber (13) in which a gas at a lower pressure than in the high-pressure chamber (12) is arranged during operation of the laser processing head (1), wherein the high-pressure chamber (12) and the low-pressure chamber (13) are separated by a wall (9) that comprises a non-metallic material at least in one region.

9. The laser processing head according to claim 8, **characterized in that** the wall (9) has a passage opening (10) which is closed by an element (11) made of non-metallic material.

10. The laser processing head according to claim 8 or 9, **characterized in that** the optical element (2) is arranged in a lens cartridge (3), the wall (9) of which has a passage opening (10) which is closed by an element (11) made of non-metallic material.

11. The laser processing head according to claim 10, **characterized in that** the element (11) made of non-metallic material is adhesively fixed in the passage opening (10).

## Revendications

1. Tête d'usinage laser (1) munie d'un élément optique présentant un transpondeur (7) et d'un support (17) pour l'élément optique (2), **caractérisée en ce que** le transpondeur (7) contient des informations lisibles concernant l'élément optique (2), et **en ce que** l'élément optique présente une surface optiquement inutilisée en fonctionnement et/ou non détectée par le faisceau laser, le transpondeur (7) étant disposé dans la zone de cette surface et la tête d'usinage laser (1) présentant un dispositif de lecture et/ou d'écriture (8) qui est associé au transpondeur (7) de l'élément optique (2).

2. Tête d'usinage laser selon la revendication 1, **caractérisée en ce que** la surface est une surface périphérique de l'élément optique (2).

3. Tête d'usinage laser selon la revendication 2, **caractérisée en ce que** le transpondeur (7) est disposé sur la surface périphérique.

4. Tête d'usinage laser selon l'une des revendications précédentes, **caractérisée en ce que** la surface, en particulier la surface périphérique, présente une section plane (15), en particulier un chanfrein de surface plan ou une entaille de surface plane, sur lequel ou laquelle est disposé le transpondeur (7).

5. Tête d'usinage laser selon l'une des revendications précédentes, **caractérisée en ce qu'**une information concernant l'historique et/ou l'état de l'élément optique (2) est enregistrée dans le transpondeur (7).

6. Tête d'usinage laser selon l'une des revendications précédentes, **caractérisée en ce que** le transpondeur (7) est conçu comme un transpondeur RFID.

7. Tête d'usinage laser selon l'une des revendications précédentes, **caractérisée en ce qu'**il est prévu sur le support (17) pour l'élément optique (2) une aide à l'orientation pour le montage en position correcte de l'élément optique (2).

8. Tête d'usinage laser selon l'une des revendications précédentes, **caractérisée en ce que** l'élément optique (2) est disposé dans une chambre à haute pression (12) dans laquelle, lors du fonctionnement de la tête d'usinage laser (1), un gaz à haute pression est disposé et **en ce que** le dispositif de lecture et/ou d'écriture (8) est disposé dans une chambre à basse pression (13) dans laquelle, pendant le fonctionnement de la tête d'usinage laser (1), un gaz est disposé à une pression plus faible que dans la chambre à haute pression (12), la chambre à haute pression (12) et la chambre à basse pression (13) étant séparées par une paroi (9) présentant, au moins dans une zone, un matériau non métallique.

9. Tête d'usinage laser selon la revendication 8, **caractérisée en ce que** la paroi (9) présente une ouverture de passage (10) fermée par un élément (11) en matériau non métallique.

10. Tête d'usinage laser selon la revendication 8 ou 9, **caractérisée en ce que** l'élément optique (2) est disposé dans une cartouche de lentilles (3) dont la paroi (9) présente une ouverture de passage (10) fermée par un élément (11) en matériau non métallique.

11. Tête d'usinage laser selon la revendication 10, **caractérisée en ce que** l'élément (11) en matériau non métallique est collé dans l'ouverture de passage (10).
